# EUROPÄISCHE PATENTSCHRIFT

(11) **EP 4 078 120 B1**
(45) Veröffentlichungstag und Bekanntmachung des Hinweises auf die Patenterteilung: **11.12.2024**
(21) Anmeldenummer: 20799661.2
(22) Anmeldetag: 27.10.2020
(51) Int. Cl.: G01K 1/143, G01K 1/08, G01K 1/14, G01K 7/22, G01D 11/30

(54) **SENSORVORRICHTUNG, ELEKTRISCHE EINRICHTUNG MIT SENSORVORRICHTUNG UND FAHRZEUG MIT SENSORVORRICHTUNG**
SENSOR ARRANGEMENT, ELECTRIC DEVICE HAVING A SENSOR ARRANGEMENT, AND VEHICLE HAVING A SENSOR ARRANGEMENT
ENSEMBLE CAPTEUR, DISPOSITIF ÉLECTRIQUE DOTÉ D'UN ENSEMBLE CAPTEUR ET VÉHICULE ÉQUIPÉ D'UN ENSEMBLE CAPTEUR

(30) Priorität: 19.12.2019 DE 102019135221; 13.03.2020 DE 102020107007
(43) Veröffentlichungstag der Anmeldung: 26.10.2022
(73) Patentinhaber: TDK Electronics AG, 81671 München (DE)
(72) Erfinder: FOERSTER, Philipp, 10249 Berlin (DE); DEHOFF, Carsten, 13129 Berlin (DE)
(74) Vertreter: Epping - Hermann - Fischer
(86) Internationale Anmeldenummer: PCT/EP2020/080124
(87) Internationale Veröffentlichungsnummer: WO 2021/121744

(56) Entgegenhaltungen:
- DE-A1- 102013 021 798
- DE-A1- 102016 119 430
- JP-A- 2003 240 642
- US-B2- 10 436 648

## Beschreibung

Es werden eine Sensorvorrichtung, eine elektrische Einrichtung mit einer Sensorvorrichtung und ein Fahrzeug mit einer Sensorvorrichtung angegeben. Bekannte Sensorvorrichtungen sind in den Offenlegungsschriften DE 10 2016 119 430 A1, DE 10 2013 021 798 A und JP 2003 240642 A, und in der Patentschrift US 10,436,648 B2 offenbart.

Gemäß der Erfindung weist eine Sensorvorrichtung ein Sensorelement auf.

Gemäß einer weiteren Ausführungsform weist eine elektrische Einrichtung die Sensorvorrichtung auf. Weiterhin kann die elektrische Einrichtung einen elektrischen Verbraucher aufweisen. Die Sensorvorrichtung ist besonders bevorzugt am elektrischen Verbraucher angeordnet und befestigt. Der elektrische Verbraucher kann besonders bevorzugt ein Elektromotor sein. Besonders bevorzugt weist die elektrische Einrichtung und besonders bevorzugt der elektrische Verbraucher ein Montageelement auf, an dem die Sensorvorrichtung angeordnet und befestigt ist. Die elektrische Einrichtung kann entsprechend einen elektrischen Verbraucher mit einem Montageelement aufweisen, das dazu vorgesehen und eingerichtet ist, dass die Sensorvorrichtung daran befestigt wird.

Gemäß einer weiteren Ausführungsform weist ein Fahrzeug die Sensorvorrichtung auf. Das Fahrzeug kann ein Straßenfahrzeug, ein schienengebundenes Fahrzeug, ein Wasserfahrzeug oder ein Luftfahrzeug sein. Besonders bevorzugt ist das Fahrzeug ein Kraftfahrzeug. Das Fahrzeug kann insbesondere einen elektrischen Verbraucher aufweisen. Die Sensorvorrichtung kann am elektrischen Verbraucher angeordnet und befestigt sein. Entsprechend kann das Fahrzeug besonders bevorzugt die elektrische Einrichtung aufweisen. Weiterhin kann es auch möglich sein, dass die elektrische Einrichtung Teil einer Vorrichtung wie etwa einer Haushaltsvorrichtung, einer medizinischen Vorrichtung oder einer Industrievorrichtung ist, wobei die Vorrichtung den elektrischen Verbraucher und die Sensorvorrichtung aufweist und die Sensorvorrichtung am elektrischen Verbraucher angeordnet und befestigt ist.

Die vorab und im Folgenden beschriebenen Merkmale und Ausführungsformen gelten gleichermaßen für die Sensorvorrichtung, die elektrische Einrichtung, das Fahrzeug und die Vorrichtung.

Das Sensorelement ist besonders bevorzugt ein Temperatursensorelement, so dass die Sensorvorrichtung zur Temperaturmessung vorgesehen und eingerichtet sein kann. Hierzu kann das Sensorelement ein Thermistormaterial aufweisen. Das Thermistormaterial kann beispielsweise ein Heißleiter- beziehungsweise NTC-Thermistormaterial (NTC: "negative temperature coefficient") oder ein Kaltleiterbeziehungsweise PTC-Material (PTC: "positive temperature coefficient") sein. Das Sensorelement kann beispielsweise ein keramisches Heißleiter-Thermistorelement aufweisen oder sein. Derartige Sensorelemente können bevorzugt sein, um Temperaturen für die Überwachung und Regelung in unterschiedlichsten Anwendungen zu messen. Das Sensorelement kann beispielsweise im Wesentlichen durch ein beispielsweise chipförmig ausgeformtes Thermistormaterial mit aufgebrachten elektrischen Anschlüssen in Form von Elektrodenschichten ausgebildet sein. Weiterhin sind auch andere Sensortypen sowie andere Sensormaterialien und Ausgestaltungen möglich.

Gemäß der Erfindung weist die Sensorvorrichtung ein Gehäuse auf. Das Sensorelement ist im Gehäuse angeordnet und vom Gehäuse umgeben. Elektrische Zuleitungen, die das Sensorelement kontaktieren, sind bevorzugt aus dem Gehäuse herausgeführt.

Weiterhin kann die Sensorvorrichtung dazu eingerichtet und vorgesehen sein, in der Nähe, in mittelbarem Kontakt oder bevorzugt in unmittelbarem Kontakt am elektrischen Verbraucher angeordnet zu werden. Somit kann die elektrische Einrichtung besonders bevorzugt die Sensorvorrichtung unmittelbar am elektrischen Verbraucher angeordnet und befestigt aufweisen.

Besonders bevorzugt weisen die Materialien der Sensorvorrichtung, also beispielsweise das Material des Gehäuses, des Sensorelements, von Drahtkontaktierungen, von elektrischen Zuleitungen und/oder eines Vergussmaterials, eine hohe Temperaturstabilität auf. Besonders bevorzugt weisen alle Materialien der Sensorvorrichtung eine hohe Temperaturstabilität auf. Beispielsweise können die Materialien der Sensorvorrichtung für eine Verwendung bei Temperaturen in einem Bereich von größer oder gleich -40°C und kleiner oder gleich 200°C eingerichtet und vorgesehen sein, so dass die Sensorvorrichtung im angegebenen Temperaturbereich verwendet werden kann.

Besonders bevorzugt weist die Sensorvorrichtung eine hohe Spannungsfestigkeit auf. Dies kann besonders vorteilhaft sein, wenn die Sensorvorrichtung in der Nähe oder in mittelbarem Kontakt oder in unmittelbarem Kontakt mit einer stromführenden und/oder eine elektrische Spannung aufweisenden Oberfläche des elektrischen Verbrauchers angeordnet ist. Besonders bevorzugt ist die Sensorvorrichtung dazu eingerichtet und vorgesehen, in der Nähe oder in mittelbarem Kontakt oder bevorzugt in unmittelbarem Kontakt mit einer Oberfläche betrieben zu werden, die eine elektrische Spannung von bis zu 2500 V aufweisen kann.

Besonders bevorzugt weist die Sensorvorrichtung eine kurze Antwortzeit auf. Die Antwortzeit der Sensorvorrichtung kann beispielsweise durch den Reaktionszeitparameter t63 charakterisiert sein, der kleiner oder gleich 10 s und besonders bevorzugt kleiner oder gleich 5 s beträgt. Im Fall einer Sensorvorrichtung zur Temperaturmessung kann insbesondere t63 < 5 s für einen Temperatursprung zwischen 25°C und 85°C gelten, wobei die die Messung des Parameters in einer Flüssigkeit durchgeführt werden kann.

Das Gehäuse ist mehrteilig und weist einen Hohlraum auf, in dem das Sensorelement angeordnet ist. Weiter weist das Gehäuse einen Grundteil und einen Deckelteil auf, die durch eine mechanische Verbindung und/oder eine klebende Verbindung miteinander verbunden sein können. Der Hohlraum kann weiterhin zumindest teilweise ein Gas, beispielsweise Luft, und/oder ein Vergussmaterial, beispielsweise einen Kunststoff, aufweisen. Das Vergussmaterial, das beispielsweise eine Verbindung zwischen den Teilen des Gehäuses bewirken kann, ist beispielsweise ein Harz, besonders bevorzugt ein Epoxid. Alternativ oder zusätzlich sind auch andere Vergussmaterialien möglich. Das Gehäuse weist einen Kunststoff auf oder ist daraus.

Besonders bevorzugt weist das Gehäuse, also besonders bevorzugt der Kunststoff, eine hohe Temperaturstabilität und eine hohe Spannungsfestigkeit wie vorab beschrieben auf. Darüber hinaus ist es vorteilhaft, wenn das Gehäuse, also besonders bevorzugt der Kunststoff, im Fall eines Temperatursensorelements eine hohe Wärmeleitfähigkeit aufweist, um eine vorab beschriebene kurze Antwortzeit zu ermöglichen. Weiterhin kann das Gehäuse, also besonders bevorzugt der Kunststoff, eine hohe mechanische Festigkeit aufweisen, um im Betrieb eine ausreichende Stabilität gegenüber mechanischen Belastungen aufzuweisen.

Gemäss der Erfindung, weist das Gehäuse einen Kunststoff auf Basis eines Flüssigkristallpolymers, kurz LCP ("liquid crystal polymer"), auf.

Besonders bevorzugt wird ein LCP verwendet, dessen Ausgangspolymer mittels eines Formprozesses, also beispielsweise mittels Spritzguss oder Extrusion, verarbeitet werden kann. Der Kunststoff weist weiterhin ein Füllmaterial auf.

Mit anderen Worten ist im Kunststoff, also im LCP, ein Füllmaterial, beispielsweise in Form von dispergierten Partikeln und/oder Fasern und/oder eines gebundenen Materials, vorhanden. Das Füllmaterial ist Bornitrid. Das Gehäuse weist einen Kunststoff auf oder ist daraus, der durch ein mit Bornitrid vernetztes und besonders bevorzugt stark vernetztes Thermoplast, nämlich ein LCP, gebildet wird. Ein derartiges Material kann besonders geeignet sein, um eine hohe thermische Leitfähigkeit bei gleichzeitig hoher Spannungsfestigkeit zu gewährleisten.

Gemäß einer weiteren Ausführungsform ist das Montageelement Teil einer Stromschiene des elektrischen Verbrauchers oder an einer Stromschiene des elektrischen Verbrauchers befestigt. Entsprechend kann das Montageelement zumindest im Betrieb des elektrischen Verbrauchers selbst zumindest eine elektrische Spannung aufweisen und/oder es kann ein elektrischer Strom durch das Montageelement fließen. Das Montageelement kann beispielsweise in Form einer Zunge, insbesondere einer Metallzunge, ausgebildet sein, auf die die Sensorvorrichtung aufgeschoben werden kann. Das Montageelement kann somit aus einer stromführenden Schiene, beispielsweise einer Kupferschiene, herausgeführt sein.

Gemäß der Erfindung weist die Sensorvorrichtung ein mechanisches Befestigungselement auf. Das mechanische Befestigungselement weist ein Federelement auf.

Besonders bevorzugt weist das mechanische Befestigungselement ein metallisches Federelement auf oder ist daraus. Mittels des mechanischen Befestigungselements kann eine Fixierung der Sensorvorrichtung an einem Montageelement, insbesondere eines elektrischen Verbrauchers, erreicht werden. Besonders bevorzugt kann das Montageelement in einem montierten Zustand der Sensorvorrichtung zwischen einem Teil des Gehäuses und einem Teil des Befestigungselements eingeklemmt sein.

Insbesondere kann das mechanische Befestigungselement ein metallisches Federelement sein, das als Metallklammer ausgebildet ist, beispielsweise mit oder aus Edelstahl, etwa ein CrNi-Stahl. Das mechanische Befestigungselement kann am Gehäuse oder einem Teil des Gehäuses angeordnet und befestigt sein. Beispielsweise kann ein Teil des mechanischen Befestigungselements von einem Teil des Gehäuses umformt sein und/oder das mechanische Befestigungselement kann einen Teil des Gehäuses umgreifen, so dass das mechanische Befestigungselement dauerhaft und stabil mit dem Gehäuse verbunden ist. Durch eine federnde Rückstellkraft des mechanischen Befestigungselements kann ein ständiger Kontakt mit dem Montageelement gewährleistet werden, an dem die Sensorvorrichtung in der elektrischen Einrichtung befestigt ist, so dass im Fall einer Temperaturmessung die Oberflächentemperatur des Montageelements genau erfasst werden kann.

Weiterhin kann das mechanische Befestigungselement ein Rastelement aufweisen. Das Rastelement kann im montierten Zustand der Sensorvorrichtung am Montageelement in ein Rastgegenelement des Montageelements einrasten, so dass eine sichere Fixierung der Sensorvorrichtung am Montageelement auch bei mechanischen Belastungen gewährleistet werden kann. Das Rastelement kann beispielsweise als Rastnase ausgebildet sein und in einem montierten Zustand der Sensorvorrichtung an einem Montageelement in ein als Fenster ausgebildetes Rastgegenelement eingreifen. Alternativ hierzu können auch das Rastgegenelement als Nase und das Rastelement als Fenster ausgebildet sein.

Weiterhin kann das Gehäuse oder zumindest ein Teil davon zumindest ein montageleitendes Element aufweisen. Das zumindest eine montageleitende Element kann ausgewählt sein aus einer oder mehreren Einführschrägen, einer oder mehreren Führungsnuten, einer oder mehrerer Fasen. Eine Fase kann hier und im Folgenden bevorzugt eine Anschrägung oder eine eckige oder runde Ein- oder Ausbuchtung an einer Ecke oder einer Seite des montageleitenden Elements sein. Bevorzugt weist das Gehäuse als zumindest eines montageleitendes Element mehrere montageleitende Elemente auf. Einführschrägen und Führungsnute können ein erleichtertes Aufschieben der Sensorvorrichtung auf dem Montageelement bewirken. Besonders bevorzugt ist das zumindest eine montageleitende Element am selben Teil des Gehäuses ausgebildet, an dem auch das mechanische Befestigungselement angeordnet ist. Das Montageelement kann beispielsweise eine einseitige Fase aufweisen, die als Gegenstück zu einer einseitigen Fase am Gehäuse ausgebildet ist. Dadurch kann eine unbeabsichtigte falsche Montage der Sensorvorrichtung auf dem Montageelement gemäß dem unter dem Begriff "Poka Yoke" bekannten Prinzip auf einfache Weise vermieden werden. Durch das zumindest eine montageleitende Element kann somit eine Führung während der Montage und/oder eine Verdrehsicherheit bei der Montage erreicht werden.

Die hier beschriebene Sensorvorrichtung kann besonders bevorzugt dazu vorgesehen und eingerichtet sein, eine möglichst schnelle und genaue Temperaturmessung einer stromführenden Stromschiene, beispielsweise einer Kupferwendel, in einem Elektromotor eines Fahrzeugs zu ermöglichen. Bisherige Messsysteme sind im Vergleich zur hier beschriebenen Sensorvorrichtung beispielsweise durch Kleben oder Umspritzen kompliziert zu integrieren. Das hier beschriebene System mit der Sensorvorrichtung und dem Montageelement erfüllt hingegen Anforderungen an eine einfache und schnelle Montage und/oder Demontage. Dabei kann/können insbesondere eines oder mehrere der folgenden Merkmale vorteilhaft sein:
- eine Herausführung der Stromschiene in Form des Montageelements, um Platz für die Integration der Sensorvorrichtung zu schaffen;
- die Einbringung eines Rastgegenelements, insbesondere eines Rastfensters, in die Stromschiene und insbesondere in das Montageelement zur dauerhaften Fixierung der Sensorvorrichtung;
- die Einbringung eines Rastelements, beispielsweise in Form einer Rastnase in Form eines metallischen Wiederhakens, in das mechanische Befestigungselement der Sensorvorrichtung zur dauerhaften Fixierung der Sensorvorrichtung im Rastgegenelement;
- die Nutzung eines mechanischen Befestigungselements, besonders bevorzugt in Form eines metallischen Federelements, zur Einbringung eines dauerhaften Anpressdrucks zwischen Montageelement und Sensorvorrichtung;
- die Einbringung einer doppelten Führungsnut als montageleitendes Element in ein Gehäuseteil der Sensorvorrichtung;
- die Einbringung jeweils einer einseitigen Fase (konstruktiv) in das Montageelement und in ein Gehäuseteil der Sensorvorrichtung, um eine Verdrehsicherheit zu gewährleisten;
- die Nutzung eines mit Bornitrid stark vernetzten Thermoplasts, nämlich eines LCPs, als Gehäusematerial, um eine hohe thermische Leitfähigkeit bei gleichzeitig hoher Spannungsfestigkeit zu gewährleisten.

Mit der hier beschriebenen Sensorvorrichtung kann besonders bevorzugt eine Temperaturmessung einer Metalloberfläche einer Stromschiene eines Elektromotors erreicht werden. Dies kann mit einem miniaturisierten Design für ein hochintegriertes System erfolgen. Weiterhin kann eine leichte und sichere, schraubenlose Installation erreicht werden.

Weitere Vorteile, vorteilhafte Ausführungsformen und Weiterbildungen ergeben sich aus den im Folgenden in Verbindung mit den Figuren beschriebenen Ausführungsbeispielen.

Es zeigen:
Figuren 1A bis 1H schematische Darstellungen einer Sensorvorrichtung gemäß einem Ausführungsbeispiel,
Figuren 2A und 2B schematische Darstellungen einer elektrischen Einrichtung und eines Fahrzeugs mit einer Sensorvorrichtung gemäß weiteren Ausführungsbeispielen,
Figuren 3A und 3B schematische Darstellungen eines Montageelements für eine Sensorvorrichtung gemäß einem weiteren Ausführungsbeispiel und
Figuren 4A und 4B schematische Darstellungen eines Montageelements und einer Sensorvorrichtung gemäß einem weiteren Ausführungsbeispiel.

In den Ausführungsbeispielen und Figuren können gleiche, gleichartige oder gleich wirkende Elemente jeweils mit denselben Bezugszeichen versehen sein. Die dargestellten Elemente und deren Größenverhältnisse untereinander sind nicht als maßstabsgerecht anzusehen, vielmehr können einzelne Elemente, wie zum Beispiel Schichten, Bauteile, Bauelemente und Bereiche, zur besseren Darstellbarkeit und/oder zum besseren Verständnis übertrieben groß dargestellt sein.

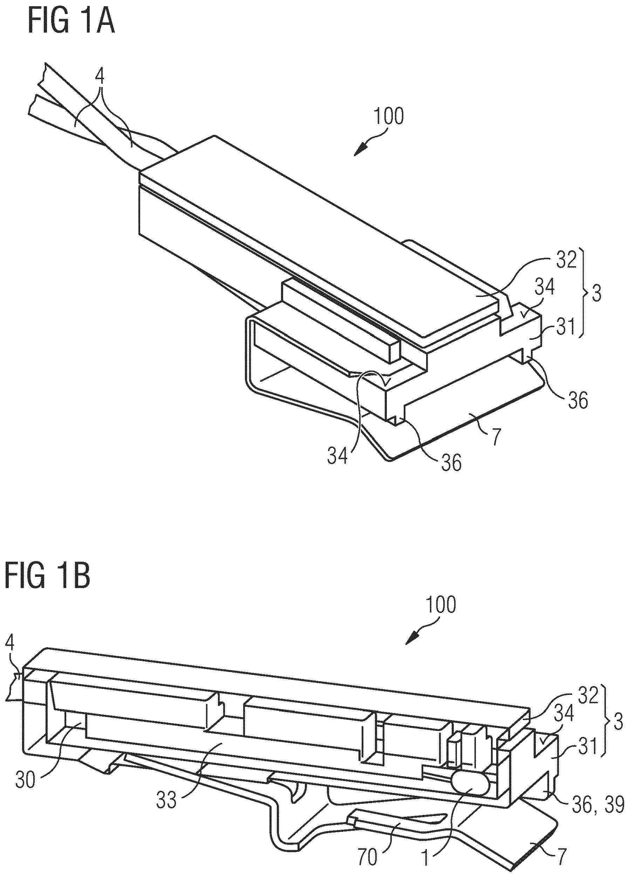

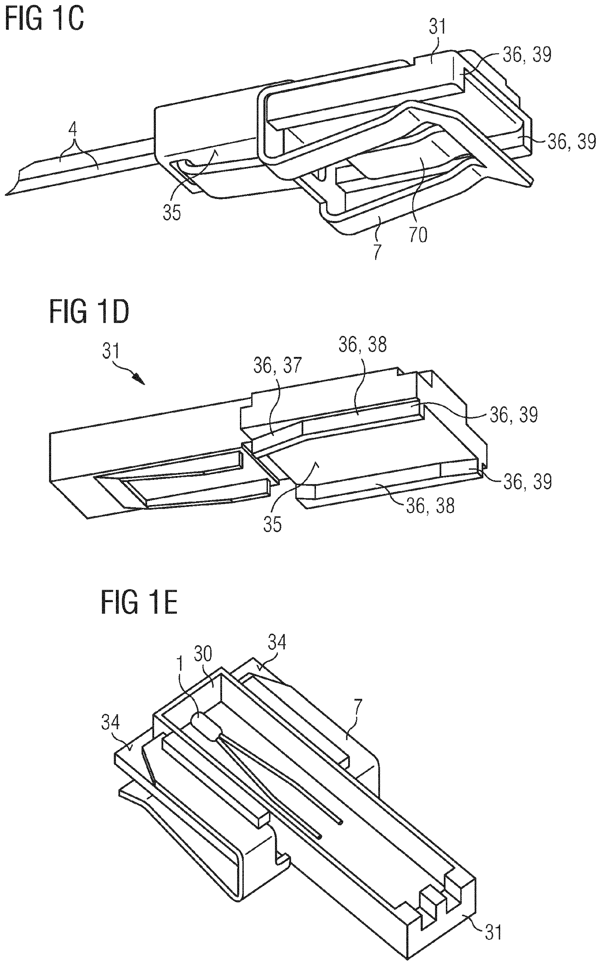

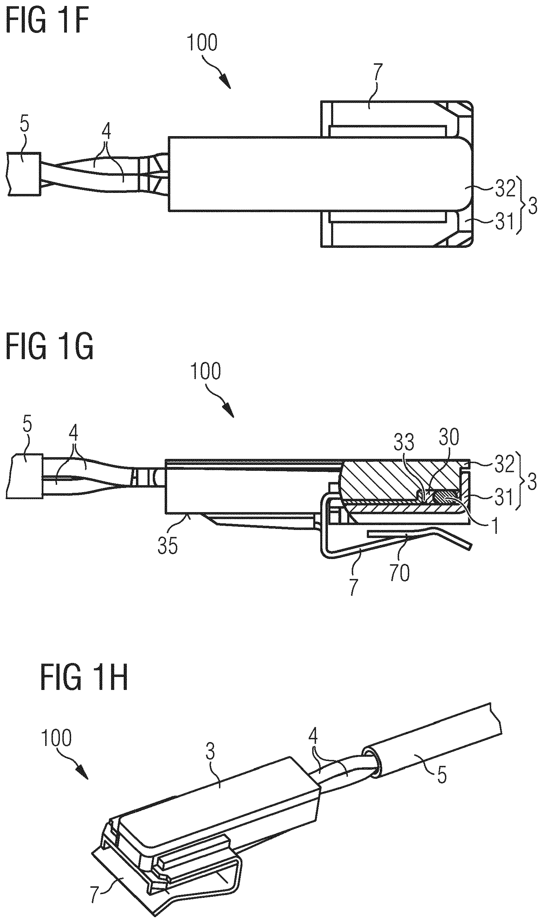

In den Figuren 1A bis 1H sind schematische Darstellungen einer Sensorvorrichtung 100 oder zumindest Teilen dieser gezeigt. Die Figur 1A zeigt eine dreidimensionale Aufsicht, die Figur 1B zeigt eine teilweise aufgeschnittene dreidimensionale Ansicht, die Figuren 1C bis 1E zeigen dreidimensionale Ansichten einiger Komponenten der Sensorvorrichtung 100 und die Figuren 1F bis 1H weitere Ansichten der Sensorvorrichtung 100, wobei in Figur 1G eine teilweise Aufsicht und eine teilweise Schnittdarstellung gezeigt ist. Die nachfolgende Beschreibung bezieht sich gleichermaßen auf alle Figuren 1A bis 1H.

Die Sensorvorrichtung 100 weist ein Sensorelement 1 auf. Das Sensorelement 1 kann beispielsweise als Sensorchip ausgebildet sein. Insbesondere ist das Sensorelement 1 rein beispielhaft als Temperatursensorelement ausgebildet, das ein Thermistormaterial, beispielsweise ein NTC- oder PTC-Material, in Chipform aufweist, das mit elektrischen Anschlüssen in Form von Elektrodenschichten bildenden Metallisierungen versehen ist. Auch wenn sich die nachfolgende Beschreibung auf einen Temperatursensor bezieht, kann das Sensorelement 1 alternativ auch eine andere Funktionalität und einen anderen Aufbau aufweisen, so dass die Sensorvorrichtung auch als anderer Sensortyp ausgebildet sin kann. Im gezeigten Ausführungsbeispiel kann es sich beim Sensorelement 1 insbesondere um ein NTC-Thermistorelement handeln.

Die elektrischen Anschlüsse des Sensorelements 1 sind über Drahtverbindungen 2, beispielsweise in Form von aufgelöteten, elektrisch leitend aufgeklebten oder gebondeten Drähten, elektrisch kontaktierbar. Die Drahtverbindungen 2 sind beispielsweise kupferummantelte FeNi-Drähte. Zum Schutz des Sensorelements 1 und der Drahtverbindungen 2 sind diese wie gezeigt mit einer Verkapselung umhüllt. Die Verkapselung kann beispielsweise ein Glas und/oder einen Kunststoff aufweisen oder daraus sein. Im gezeigten Ausführungsbeispiel kann es sich aufgrund der Temperaturstabilitätsanforderungen insbesondere um eine Verkapselung mit einem Glas handeln.

Weiterhin weist die Sensorvorrichtung 100 ein Gehäuse 3 auf. Das Sensorelement 1 ist im Gehäuse 3 angeordnet und vom Gehäuse 3 umgeben. Elektrische Zuleitungen 4 sind mit den Drahtverbindungen 2 verbunden, beispielsweise durch eine Lötverbindung, Schweißverbindung oder Crimpverbindung, und aus dem Gehäuse 3 herausgeführt. Die elektrischen Zuleitung 4 können in einer Kabelhülle 5, die im gezeigten Ausführungsbeispiel beispielsweise ein Glasfasermaterial aufweist oder daraus ist, zu einem elektrischen Steckverbinder mit entsprechenden elektrischen Anschlusselementen geführt werden, über den die Sensorvorrichtung 100 angeschlossen werden kann.

Das Gehäuse 3 ist mehrteilig und weist einen Hohlraum 30 auf, in dem das Sensorelement 1 angeordnet ist. Das Gehäuse 3 wie gezeigt weist einen Grundteil 31 und einen Deckelteil 32 auf, die durch eine mechanische Verbindung und/oder eine klebende Verbindung miteinander verbunden sind.

Der Hohlraum 30 kann zumindest teilweise mit einem Gas, beispielsweise Luft, und/oder einem Vergussmaterial 33, beispielsweise einem Kunststoff, gefüllt sein. Das Vergussmaterial 33 ist beispielsweise ein Harz, besonders bevorzugt ein Epoxidharz. In das Vergussmaterial 33 können das Sensorelement 1 und/oder zumindest die Drahtverbindungen 2 oder Teile dieser eingebettet sein. Dazu kann beispielsweise das Grundteil 31 eine Vertiefung, die zumindest einen Teil des Hohlraums 30 bilden kann, wie in Figur 1E gezeigt ist, oder eine Auflagefläche aufweisen. In die Vertiefung oder auf die Auflagefläche kann das Sensorelement 1 ein- oder aufgelegt werden und anschließend das kann das Vergussmaterial 33 aufgebracht werden. Das Vergussmaterial 33 kann beispielsweise auch eine Verbindung zwischen den Teilen des Gehäuses 3, also im gezeigten Ausführungsbeispiel zwischen dem Grundteil 31 und dem Deckelteil 32, bewirken.

Das Gehäuse 3, also das Grundteil 31 und das Deckelteil 32, weist einen Kunststoff auf oder ist daraus.

Besonders bevorzugt weist das Gehäuse 3, also besonders bevorzugt der Kunststoff, eine hohe Temperaturstabilität und eine hohe Spannungsfestigkeit auf. Darüber hinaus ist es vorteilhaft, wenn das Gehäuse 3, also besonders bevorzugt der Kunststoff, eine hohe Wärmeleitfähigkeit aufweist. Weiterhin kann das Gehäuse 3, also besonders bevorzugt der Kunststoff, eine hohe mechanische Festigkeit aufweisen, um im Betrieb eine ausreichende Stabilität gegenüber mechanischen Belastungen aufzuweisen.

Das Gehäuse weist einen Kunststoff auf Basis eines LCPs auf. Besonders bevorzugt wird ein LCP verwendet, dessen Ausgangspolymer mittels eines Formprozesses, also beispielsweise mittels Spritzguss oder Extrusion, verarbeitet werden kann. Der Kunststoff weist weiterhin ein Füllmaterial auf, das gemäss der Erfindung Bornitrid ist.

Entsprechend weisen das Grundteil 31 und das Deckelteil 32 einen Kunststoff auf oder sind daraus, der durch ein mit Bornitrid stark vernetztes Thermoplast, nämlich ein LCP, gebildet wird.

Durch die verwendeten Materialien ist die Sensorvorrichtung 100 dazu eingerichtet und vorgesehen sein, in der Nähe, in mittelbarem Kontakt oder bevorzugt in unmittelbarem Kontakt an einem elektrischen Verbraucher angeordnet zu werden.

Besonders bevorzugt weisen alle Materialien der Sensorvorrichtung 100, also das Material des Gehäuses 3, des Sensorelements 1 sowie der Verkapselung des Sensorelements 1, der Drahtverbindungen 2 und der elektrischen Zuleitungen 4 sowie des Vergussmaterials 33 eine hohe Temperaturstabilität auf. Wie im allgemeinen Teil beschrieben sind die Materialien der Sensorvorrichtung 100 so ausgewählt, dass die Sensorvorrichtung 100 in einer elektrischen Einrichtung verwendet werden kann, bei deren Betrieb Betriebstemperaturen vorliegen können, die bevorzugt in einem Temperaturbereich von größer oder gleich -40°C und kleiner oder gleich 200° liegen können. Weiterhin weist die Sensorvorrichtung 100 eine hohe Spannungsfestigkeit auf. Besonders bevorzugt ist die Sensorvorrichtung 100 dazu eingerichtet und vorgesehen, in der Nähe oder in mittelbarem Kontakt oder bevorzugt in unmittelbarem Kontakt mit einer Oberfläche betrieben zu werden, die eine elektrische Spannung von bis zu 2500 V aufweisen kann. Darüber hinaus weist die Sensorvorrichtung 100 eine kurze Antwortzeit auf, insbesondere mit t63 < 5 s für einen Temperatursprung zwischen 25°C und 85°C.

Weiterhin weist die Sensorvorrichtung 100 ein mechanisches Befestigungselement 7 auf. Das mechanische Befestigungselement ist als ein metallisches Federelement ausgebildet. Mittels des mechanischen Befestigungselements 7 kann eine Fixierung der Sensorvorrichtung 100 an einem Montageelement, insbesondere an einem Montageelement eines elektrischen Verbrauchers, erreicht werden, wie weiter unten weiter ausgeführt ist.

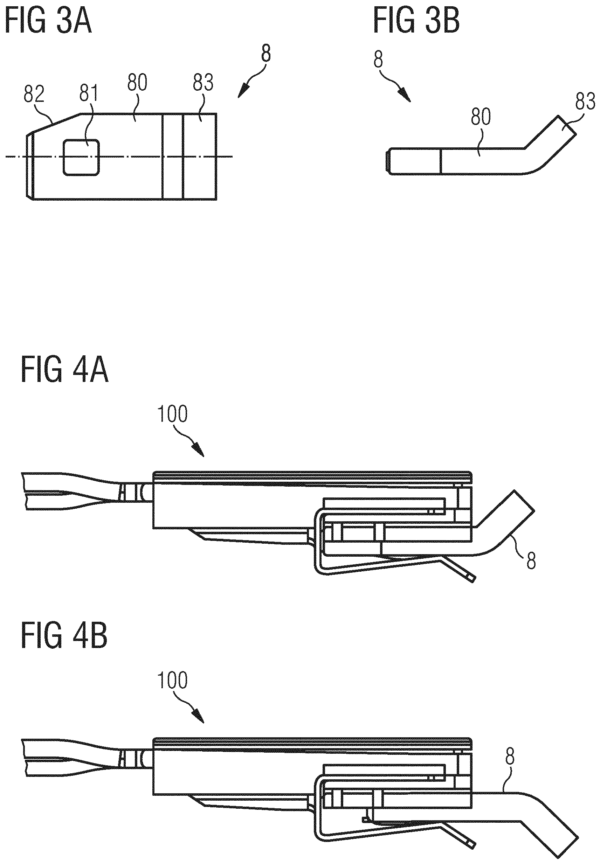

Insbesondere kann das mechanische Befestigungselement 7 als Metallklammer ausgebildet sein, beispielsweise mit oder aus Edelstahl, etwa ein CrNi-Stahl. Das mechanische Befestigungselement 7 ist am Gehäuse 3 und im gezeigten Ausführungsbeispiel insbesondere am Grundteil 31 befestigt. Beispielsweise kann ein Teil des mechanischen Befestigungselements 7 von einem Teil des Gehäuses 3 umformt sein und/oder das mechanische Befestigungselement 7 kann einen Teil des Gehäuses 3 umgreifen, so dass das mechanische Befestigungselement dauerhaft und stabil mit dem Gehäuse 3 verbunden ist. Wie beispielsweise in den Figuren 1A, 1C und 1E erkennbar ist, umgreift ein Teil des mechanischen Befestigungselements 7 einen Teil des Grundteils 31. Das Grundteil 31 weist dazu entsprechende Auflageflächen 34 auf der einer Unterseite 35 gegenüberliegenden Seite auf. Wird die Sensorvorrichtung 100 wie weiter unten beschrieben auf ein Montageelement aufgeschoben, erzeugt das mechanische Befestigungselement 7 eine Klemmkraft, durch die die Sensorvorrichtung 100 sicher gehalten werden kann. Insbesondere wird das Montageelement, wie beispielsweise weiter unten in Figur 4A gezeigt ist, zwischen der Unterseite 35 des Gehäuses 3 und dem mechanischen Befestigungselement 7 eingeklemmt.

Weiterhin weist das mechanische Befestigungselement 7 ein Rastelement 70 auf. Das Rastelement 70 kann wie gezeigt als Rastnase ausgebildet sein und im montierten Zustand der Sensorvorrichtung am Montageelement in ein entsprechendes Rastgegenelement des Montageelements in Form eines Fensters einrasten, so dass eine sichere Fixierung der Sensorvorrichtung am Montageelement auch bei mechanischen Belastungen gewährleistet werden kann.

Weiterhin weist das Gehäuse 3, im gezeigten Ausführungsbeispiel insbesondere das Grundteil 31, zumindest ein montageleitendes Element 36 auf. Wie insbesondere in Figur 1D erkennbar ist, weist das Grundteil 31 als montageleitende Elemente 36 eine doppelte Führungsnut 38 mit Einführschrägen 39 sowie eine einseitige Fase 37 auf. Wie weiter unten beschreiben ist, weist das Montageelement, auf dem die Sensorvorrichtung 100 montiert wird, ebenfalls eine einseitige Fase auf, die als Gegenstück zur einseitigen Fase 37 am Gehäuse 3 ausgebildet ist.

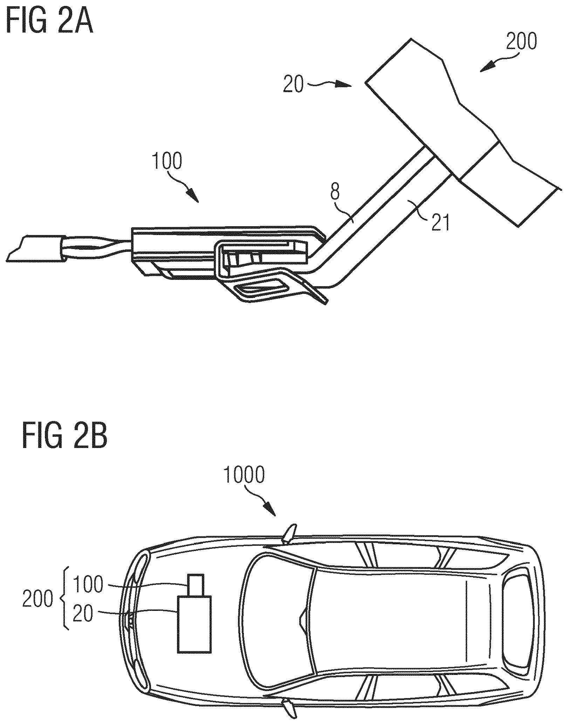

In Figur 2A ist eine elektrische Einrichtung 200 gezeigt, die eine Sensorvorrichtung 100 wie im vorherigen Ausführungsbeispiel beschrieben aufweist. Weiterhin weist die elektrische Einrichtung 200 einen elektrischen Verbraucher 20 auf, an dem die Sensorvorrichtung 100 unmittelbar angeordnet und befestigt ist. Der elektrische Verbraucher 20 kann besonders bevorzugt ein Elektromotor sein. Die elektrische Einrichtung 200 und insbesondere der elektrische Verbraucher 20 weist ein Montageelement 8, das in Verbindung mit den Figuren 3A und 3B näher beschrieben ist, auf, an dem die Sensorvorrichtung 100 angeordnet und befestigt ist. Durch die vorab beschriebene federnde Rückstellkraft des mechanischen Befestigungselements der Sensorvorrichtung 100 kann ein ständiger Kontakt mit dem Montageelement 8 gewährleistet werden, so dass die Oberflächentemperatur des Montageelements 8 genau erfasst werden kann.

Das Montageelement 8 ist im gezeigten Ausführungsbeispiel Teil einer Stromschiene 21, beispielsweise einer Kupferschiene, des elektrischen Verbrauchers 20. Alternativ kann das Montageelement 8 auch an einer Stromschiene 21 des elektrischen Verbrauchers 20 befestigt sein. Entsprechend kann das Montageelement 8 zumindest im Betrieb des elektrischen Verbrauchers 20 selbst zumindest eine elektrische Spannung aufweisen und/oder es kann ein elektrischer Strom durch das Montageelement 8 fließen.

In Figur 2B ist ein Fahrzeug 1000 gezeigt, das die elektrische Einrichtung 200 aufweist. Somit weist das Fahrzeug 1000 die Sensorvorrichtung 100 und den elektrischen Verbraucher 20, insbesondere einen Elektromotor, auf. Das Fahrzeug 1000 kann ein Straßenfahrzeug, ein schienengebundenes Fahrzeug, ein Wasserfahrzeug oder ein Luftfahrzeug sein. Besonders bevorzugt ist das Fahrzeug 1000 wie angedeutet ein Kraftfahrzeug.

In den Figuren 3A und 3B ist in einer Aufsicht und einer Seitenansicht ein Ausführungsbeispiel für das Montageelement 8 gezeigt. Das Montageelement 8 kann wie gezeigt beispielsweise in Form einer Zunge, insbesondere einer Metallzunge, ausgebildet sein, auf die die Sensorvorrichtung 100 aufgeschoben werden kann. Das Montageelement 8 weist dazu einen Aufschubbereich 80 auf, der in den durch die montageleitenden Elemente 36 gebildeten Bereich in der Unterseite 35 des Gehäuses 3 der in den Figuren 1A bis 1H gezeigten Sensorvorrichtung 100 passt. Mit einem Anschlussbereich 83 kann das Montageelement 8 am elektrischen Verbraucher, also wie vorab beschrieben beispielsweise an einer Stromschiene befestigt sein. Alternativ kann der Anschlussbereich 83 auch Teil der Stromschiene sein. Durch die beispielsweise um einen Winkel von etwa 45° gebogene oder geknickte Anordnung des Aufschubbereichs 80 zum Anschlussbereich 83 kann eine erleichterte Montage der Sensorvorrichtung 100 am elektrischen Verbraucher möglich sein.

Als Gegenstück zum Rastelement 70 des mechanischen Befestigungselements 7 der Sensorvorrichtung 100 weist das Montageelement 8 ein Rastgegenelement 81 auf, das im gezeigten Ausführungsbeispiel als Fenster ausgebildet ist, in das das als Rastnase ausgebildete Rastelement der Sensorvorrichtung eingreifen kann.

Weiterhin weist das Montageelement 8 eine einseitige Fase 82 auf, die als Gegenstück zur Fase 37 in der Unterseite 35 des Gehäuses 3 der Sensorvorrichtung 100 ausgebildet ist.

In Figur 4A ist die Sensorvorrichtung 100 auf dem Montageelement 8 angeordnet und vollständig aufgeschoben angedeutet. Durch das Rastelement der Sensorvorrichtung 100 und das Rastgegenelement des Montageelements 8 sowie aufgrund der Klemmkraft des mechanischen Befestigungselements der Sensorvorrichtung kann eine sichere und mechanisch belastbare Fixierung der Sensorvorrichtung 100 auf dem Montageelement 8 erreicht werden.

Wie in Figur 4B angedeutet ist, kann eine unbeabsichtigte falsche Montage der Sensorvorrichtung 100 auf dem Montageelement 8 auf einfache Weise durch die montageleitenden Elemente, insbesondere die einseitige Fase in der Unterseite der Sensorvorrichtung und die entsprechende einseitige Fase im Montageelement 8, vermieden werden. Somit können durch die montageleitenden Elemente der Sensorvorrichtung 100 eine Führung während der Montage sowie eine Verdrehsicherheit bei der Montage erreicht werden. Weiterhin kann zusätzlich die gewinkelte Ausbildung des Montageelements 8 eine leichte Erkennbarkeit der korrekten Montagerichtung ermöglichen.

### Bezugszeichenliste

- 1: Sensorelement
- 2: Drahtverbindung
- 3: Gehäuse
- 4: elektrische Zuleitung
- 5: Kabelhülle
- 7: mechanisches Befestigungselement
- 8: Montageelement
- 20: elektrischer Verbraucher
- 21: Stromschiene
- 30: Hohlraum
- 31: Grundteil
- 32: Deckelteil
- 33: Vergussmaterial
- 34: Auflagefläche
- 35: Unterseite
- 36: montageleitendes Element
- 37: Fase
- 38: Führungsnut
- 39: Einführschräge
- 70: Rastelement
- 80: Aufschubbereich
- 81: Rastgegenelement
- 82: Fase
- 83: Anschlussbereich
- 100: Sensorvorrichtung
- 200: elektrische Einrichtung
- 1000: Fahrzeug

## Patentansprüche

1. Sensorvorrichtung (100) mit einem Sensorelement (1) in einem Gehäuse (3),
wobei am Gehäuse ein mechanisches Befestigungselement (7) angeordnet und befestigt ist, das ein Federelement aufweist,
**dadurch gekennzeichnet, dass**
das Gehäuse einen Kunststoff auf Basis eines gefüllten Flüssigkristallpolymers aufweist,
wobei der Kunststoff ein mit Bornitrid gefülltes Flüssigkristallpolymer aufweist,
wobei das Gehäuse einen Grundteil (31) und einen Deckelteil (32), die mit einander verbunden sind, und einen Hohlraum (30), in dem das Sensorelement angeordnet ist, aufweist.

2. Sensorvorrichtung nach Anspruch 1, wobei das Sensorelement ein Temperatursensorelement ist.

3. Sensorvorrichtung nach einem der vorherigen Ansprüche, wobei das mechanische Befestigungselement ein Rastelement (70) aufweist.

4. Sensorvorrichtung nach einem der vorherigen Ansprüche, wobei das Gehäuse zumindest ein montageleitendes Element (36) aufweist, das ausgewählt ist aus einer oder mehreren Einführschrägen (39), einer oder mehreren Führungsnuten (38), einer oder mehrerer Fasen (37).

5. Sensorvorrichtung nach einem der vorherigen Ansprüche, wobei der Hohlraum zumindest teilweise ein Vergussmaterial (33) aufweist.

6. Sensorvorrichtung nach einem der vorherigen Ansprüche, wobei alle Materialien der Sensorvorrichtung eine Temperaturstabilität für eine Verwendung bei Temperaturen zumindest in einem Bereich von größer oder gleich -40°C und kleiner oder gleich 200°C aufweisen.

7. Sensorvorrichtung nach einem der vorherigen Ansprüche, wobei die Sensorvorrichtung für einen Betrieb in unmittelbarem Kontakt mit einer Oberfläche vorgesehen und eingerichtet ist, die eine Spannung von bis zu 2500 V aufweist.

8. Elektrische Einrichtung (200) mit einer Sensorvorrichtung (100) nach einem der Ansprüche 1 bis 7 und einem elektrischen Verbraucher (20), wobei die Sensorvorrichtung am elektrischen Verbraucher angeordnet und durch das mechanische Befestigungselement (7) durch eine Klemmkraft befestigt ist.

9. Elektrische Einrichtung nach Anspruch 8, wobei der elektrische Verbraucher ein Elektromotor ist.

10. Elektrische Einrichtung nach Anspruch 8 oder 9, wobei der elektrische Verbraucher ein Montageelement (8) aufweist, an dem die Sensorvorrichtung angeordnet und befestigt ist.

11. Elektrische Einrichtung nach dem vorherigen Anspruch, wobei das Montageelement Teil einer Stromschiene (21) des elektrischen Verbrauchers ist.

12. Elektrische Einrichtung nach Anspruch 10 oder 11, wobei das Montageelement in Form einer Metallzunge ausgebildet ist, auf die die Sensorvorrichtung aufgeschoben ist.

13. Elektrische Einrichtung nach einem der Ansprüche 10 bis 12, wobei das Montagelement ein Rastgegenelement (81) aufweist, in das ein Rastelement (70) des mechanischen Befestigungselements eingerastet ist.

14. Elektrische Einrichtung nach einem der Ansprüche 10 bis 13, wobei das Montageelement eine einseitige Fase (82) aufweist, die als Gegenstück zu einer einseitigen Fase (37) am Gehäuse ausgebildet ist.

15. Fahrzeug (1000) mit einer elektrischen Einrichtung (200) gemäß einem der Ansprüche 8 bis 14.

## Claims

1. Sensor device (100) comprising a sensor element (1) in a housing (3),
wherein a mechanical fastening element (7) comprising a spring element is arranged at and fastened to the housing,
**characterized in that** the housing comprises a plastic based on a filled liquid crystal polymer,
wherein the plastic comprises a liquid crystal polymer filled with boron nitride,
wherein the housing comprises a base part (31) and a cover part (32) connected to one another, and a cavity (30) with the sensor element arranged therein.

2. Sensor device according to Claim 1, wherein the sensor element is a temperature sensor element.

3. Sensor device according to either of the preceding claims, wherein the mechanical fastening element comprises a latching element (70).

4. Sensor device according to any of the preceding claims, wherein the housing comprises at least one mounting-guiding element (36) selected from one or more insertion bevels (39), one or more guide grooves (38), one or more chamfers (37).

5. Sensor device according to any of the preceding claims, wherein the cavity at least partly comprises a potting material (33).

6. Sensor device according to any of the preceding claims, wherein all materials of the sensor device have a temperature stability for use at temperatures at least in a range of greater than or equal to -40°C and less than or equal to 200°C.

7. Sensor device according to any of the preceding claims, wherein the sensor device is provided and configured for operation in direct contact with a surface having a voltage of up to 2500 V.

8. Electrical apparatus (200) comprising a sensor device (100) according to any of Claims 1 to 7 and an electrical consumer (20), wherein the sensor device is arranged at the electrical consumer and is fastened thereto by the mechanical fastening element (7) by a clamping force.

9. Electrical apparatus according to Claim 8, wherein the electrical consumer is an electric motor.

10. Electrical apparatus according to Claim 8 or 9, wherein the electrical consumer comprises a mounting element (8), the sensor device being arranged at and fastened to said mounting element.

11. Electrical apparatus according to the preceding claim, wherein the mounting element is part of a busbar (21) of the electrical consumer.

12. Electrical apparatus according to Claim 10 or 11, wherein the mounting element is embodied in the form of a metal tongue, onto which the sensor device is pushed.

13. Electrical apparatus according to any of Claims 10 to 12, wherein the mounting element comprises a mating latching element (81), into which a latching element (70) of the mechanical fastening element is latched.

14. Electrical apparatus according to any of Claims 10 to 13, wherein the mounting element comprises a one-sided chamfer (82) embodied as a counterpart to a one-sided chamfer (37) at the housing.

15. Vehicle (1000) comprising an electrical apparatus (200) according to any of Claims 8 to 14.

## Revendications

1. Dispositif de détection (100) comprenant un élément de détection (1) dans un boîtier (3),
un élément de fixation mécanique (7), qui comporte un élément à ressort, étant disposé et fixé sur le boîtier,
**caractérisé en ce que** le boîtier comprenant une matière synthétique à base d'un polymère à cristaux liquides chargé,
la matière synthétique comportant un polymère à cristaux liquides chargé de nitrure de bore,
le boîtier comportant une partie base (31) et une partie couvercle (32) qui sont reliées l'une à l'autre, ainsi qu'une cavité (30) dans laquelle est disposé l'élément de détection.

2. Dispositif de détection selon la revendication 1, l'élément de détection étant un élément de détection de température.

3. Dispositif de détection selon l'une des revendications précédentes, l'élément de fixation mécanique comportant un élément d'encliquetage (70).

4. Dispositif de détection selon l'une des revendications précédentes, le boîtier comportant au moins un élément de guidage d'assemblage (36) qui est choisi parmi un ou plusieurs biseaux d'insertion (39), une ou plusieurs rainures de guidage (38), un ou plusieurs chanfreins (37).

5. Dispositif de détection selon l'une des revendications précédentes, la cavité comportant au moins partiellement une matière d'enrobage (33).

6. Dispositif de détection selon l'une des revendications précédentes, toutes les matières du dispositif de détection ont une stabilité de température pour une utilisation à des températures au moins dans une gamme supérieure ou égale à -40 °C et inférieure ou égale à 200 °C.

7. Dispositif de détection selon l'une des revendications précédentes, le dispositif de détection étant prévu et conçu pour fonctionner en contact direct avec une surface qui présente une tension allant jusqu'à 2500 V.

8. Appareil électrique (200) comprenant un dispositif de détection (100) selon l'une des revendications 1 à 7 et un consommateur électrique (20), le dispositif de détection étant disposé sur le consommateur électrique et étant fixé par une force de serrage par le biais de l'élément de fixation mécanique (7).

9. Appareil électrique selon la revendication 8, le consommateur électrique étant un moteur électrique.

10. Appareil électrique selon la revendication 8 ou 9, le consommateur électrique comportant un élément de montage (8) sur lequel le dispositif de détection est disposé et fixé.

11. Appareil électrique selon la revendication précédente, l'élément de montage faisant partie d'une barre omnibus (21) du consommateur électrique.

12. Appareil électrique selon la revendication 10 ou 11, l'élément de montage étant réalisé sous la forme d'une languette métallique sur laquelle est poussé le dispositif de détection.

13. Appareil électrique selon l'une des revendications 10 à 12, l'élément de montage comportant un élément d'encliquetage homologue (81) dans lequel un élément d'encliquetage (70) de l'élément de fixation mécanique est encliqueté.

14. Appareil électrique selon l'une des revendications 10 à 13, l'élément de montage comportant un chanfrein unilatéral (82) qui est conçu comme pièce homologue d'un chanfrein unilatéral (37) sur le boîtier.

15. Véhicule (1000) comprenant un dispositif électrique (200) selon l'une des revendications 8 à 14.
